# EUROPÄISCHE PATENTSCHRIFT

(11) **EP 3 265 312 B1**
(45) Veröffentlichungstag und Bekanntmachung des Hinweises auf die Patenterteilung: **09.06.2021**
(21) Anmeldenummer: 16708380.7
(22) Anmeldetag: 01.03.2016
(51) Int. Cl.: B32B 37/14, B32B 15/08

(54) **VERFAHREN ZUM HERSTELLEN EINES METALLVERBUNDWERKSTOFFS MIT EINGEBETTETER FUNKTIONALER STRUKTUR UND ENTSPRECHENDER METALLVERBUNDWERKSTOFF**
METHOD FOR PRODUCING A METAL COMPOSITE MATERIAL WITH AN EMBEDDED FUNCTIONAL STRUCTURE AND CORRESPONDING METAL COMPOSITE MATERIAL
PROCÉDÉ DE PRODUCTION D'UN MATÉRIAU COMPOSITE MÉTALLIQUE MUNI D'UNE STRUCTURE FONCTIONNELLE INTÉGRÉE ET MATÉRIAU COMPOSITE MÉTALLIQUE CORRESPONDANT

(30) Priorität: 04.03.2015 DE 102015103141
(43) Veröffentlichungstag der Anmeldung: 10.01.2018
(73) Patentinhaber: ThyssenKrupp Steel Europe AG, 47166 Duisburg (DE); thyssenkrupp AG, 45143 Essen (DE)
(72) Erfinder: EHLERS, Jan-Eric, 44225 Dortmund (DE); GLASS, Roman, 44135 Dortmund (DE); SCHUHMACHER, Bernd, 44227 Dortmund (DE)
(74) Vertreter: ThyssenKrupp Steel Europe AG
(86) Internationale Anmeldenummer: PCT/EP2016/054320
(87) Internationale Veröffentlichungsnummer: WO 2016/139204

(56) Entgegenhaltungen:
- WO-A1-01/18748
- US-A1- 2009 075 027
- US-A1- 2010 000 675
- US-A1- 2013 210 186

## Beschreibung

Die vorliegende Erfindung betrifft ein Verfahren zum Herstellen eines Metallverbundwerkstoffs, insbesondere eines Stahlverbundwerkstoffs mit eingebetteter funktionaler Struktur, bei dem ein Schichtaufbau aus mehreren Schichten, die in vertikaler Richtung übereinander angeordnet werden, hergestellt und verpresst wird, wobei der Schichtaufbau durch die folgenden Schritte hergestellt wird:
- Bereitstellen einer unteren Schicht aus einem Metallsubstrat, insbesondere einem Stahlsu bstrat,
- zumindest abschnittsweises Anordnen einer Zwischenschicht in vertikaler Richtung über der unteren Schicht, die die untere Schicht berührt und
- Anordnen von einer oder mehreren funktionalen Strukturen jeweils in einem Abschnitt des Schichtaufbaus.

Ferner betrifft die Erfindung einen Metallverbundwerkstoff, insbesondere einen Stahlverbundwerkstoff mit eingebetteter funktionaler Struktur, hergestellt durch ein solches Verfahren.

Metallverbundwerkstoffe, insbesondere Stahlverbundwerkstoffe der zuvor genannten Art werden beispielsweise in Verbindung mit applizierten Dünnschicht-Photovoltaikmodulen verwendet. Dabei werden im Zuge der Herstellung des Metallverbundwerkstoffs Funktionsmodule bzw. -schichten, im Folgenden als funktionale Strukturen bezeichnet, in den Schichtaufbau eingebettet. Man spricht auch von eingebetteten Strukturen. Solche sind an sich aus der Elektronik bzw. Halbleiterindustrie bekannt (WO 2005/099310 A2, US-A-2013210186)

Beim Aufbringen von funktionalen Strukturen, zum Beispiel Dünnschicht-Photovoltaikmodulen auf ein Metallsubstrat, insbesondere auf ein Stahlsubstrat werden im Bereich der funktionalen Strukturen lokale Erhöhungen bzw. Wülste gebildet, welche bei der Weiterverarbeitung des Metallsubstrats erhöhten mechanischen Beanspruchungen, zum Beispiel beim Rollenkaschieren, insbesondere Scherkräften, ausgesetzt sind und damit einer erhöhten Degradation unterliegen. Oft sind die aufzubringenden funktionalen Strukturen gegenüber mechanischen Beanspruchungen sensibel und können zum Teil dadurch auch zerstört oder zumindest in ihrer Leistungsfähigkeit vermindert werden.

Die vorangehende Problematik tritt beispielsweise beim Aufbringen von funktionalen Strukturen auf ein Metallsubstrat auf, deren Breite kleiner als die des Metallsubstrats ist, und/oder beim (diskontinuierlichen) Aufbringen von funktionalen Strukturen in Längs- bzw. Produktionsrichtung.

Davon ausgehend ist es eine Aufgabe der vorliegenden Erfindung, ein Verfahren zum Herstellen eines Metallverbundwerkstoffs mit eingebetteter funktionaler Struktur anzugeben, bei dem das Risiko einer erhöhten Degradation verringert wird.

Die zuvor hergeleitete und aufgezeigte Aufgabe wird gemäß einer ersten Lehre der vorliegenden Erfindung bei einem Verfahren zum Herstellen eines Metallverbundwerkstoffs, insbesondere eines Stahlverbundwerkstoffs mit eingebetteter funktionaler Struktur, bei dem ein Schichtaufbau aus mehreren Schichten, die in vertikaler Richtung, das heißt senkrecht zur Längs- bzw. Produktionsrichtung und senkrecht zur Querrichtung, übereinander angeordnet werden, hergestellt und verpresst wird, wobei der Schichtaufbau durch die folgenden Schritte hergestellt wird:
- Bereitstellen einer (bezogen auf die vertikale Richtung) unteren Schicht aus einem Metallsubstrat, insbesondere einem Stahlsubstrat,
- zumindest abschnittsweises, insbesondere durchgängiges, Anordnen einer Zwischenschicht in vertikaler Richtung über der unteren Schicht, die die untere Schicht berührt und
- Anordnen von einer oder mehreren funktionalen Strukturen jeweils in einem Abschnitt des Schichtaufbaus (das heißt es gibt in der Längsrichtung und/oder Querrichtung Abschnitte mit und Abschnitte ohne eine funktionale Struktur),
dadurch gelöst, dass
der (zu verpressende) Schichtaufbau vor und insbesondere auch nach dem Verpressen in dem jeweiligen Abschnitt mit der funktionalen Struktur zumindest in einem Teilabschnitt oder über die gesamte Längs- und/oder Quererstreckung des Abschnitts mit der funktionalen Struktur dieselbe Dicke wie im übrigen Schichtaufbau, das heißt wie in den Abschnitten ohne eine funktionelle Struktur, hat;
die untere Schicht (4) abschnittsweise verformt bzw. profiliert wird, wodurch mindestens ein vertiefter Abschnitt (13) gebildet wird;
in den jeweiligen vertieften Abschnitten (13) eine funktionale Struktur (2) eingelegt wird, und
die funktionale Struktur (2) vor oder nach dem Einlegen in den jeweiligen vertieften Abschnitt (13) mit elektrischen Kontakten (15) versehen wird.

Optional ist außerdem zum Herstellen des Schichtaufbaus ferner ein zumindest abschnittsweises Anordnen einer oberen Schicht, insbesondere als Schutzschicht, welche beispielsweise in Form einer insbesondere transparenten Barrierefolie ausgebildet sein kann, welche beispielsweise einen Verbund aus mindestens einer Polymerschicht und mindestens einer keramischen Schicht, welche vorzugsweise gasundurchlässig, insbesondere gegenüber Wasserdampf und Sauerstoff ist, umfasst, in vertikaler Richtung über der unteren Schicht und insbesondere über zumindest einer der funktionalen Strukturen vorgesehen. Dabei wird die jeweilige funktionale Struktur insbesondere jeweils in einem Abschnitt zwischen der von der unteren Schicht abgewandten Seite der oberen Schicht und der von der oberen Schicht abgewandten Seite der unteren Schicht angeordnet.

Indem die Dicke des Schichtaufbaus in dem oder den Abschnitten mit der funktionellen Struktur mit der Dicke in den benachbarten Abschnitten vor dem Verpressen übereinstimmt, werden mechanische Beanspruchungen, insbesondere Scherkräfte, im Übergangsbereich zwischen Abschnitten mit einer funktionalen Struktur und benachbarten Abschnitten auf ein Minimum reduziert, wodurch das Risiko einer erhöhten Degradation deutlich verringert wird. Bevorzugt ist die Dicke des Schichtaufbaus über seine gesamte Längs- und/oder Quererstreckung (Erstreckung in Längs- und/oder Querrichtung) vor und insbesondere nach dem Verpressen konstant. Erfindungsgemäß wird also eine funktionale Struktur, wie sie aus der Elektronik- bzw. Halbleiterindustrie bekannt ist, in ein Laminat eingebettet, welches eine untere Schicht aus einem Metallsubstrat, insbesondere einem Stahlsubstrat, vorzugsweise einem Flachstahlhalbzeug, aufweist, wobei innerhalb des Schichtaufbaus eine oder mehrere Vertiefungen bzw. Aussparungen vorgesehen worden sind, die so groß sind, dass sie jeweils von einer eingebetteten funktionalen Struktur ausgefüllt werden, so dass der Schichtaufbau schon vor dem Verpressen eine zu der Unterseite durchgängig parallele Oberseite hat, also eine Oberseite ohne lokale Erhöhungen bzw. Wülste. Unter Substrat ist ein plattenförmiger, tafelförmiger oder bandförmiger Metallwerkstoff, vorzugsweise Stahlwerkstoff, zu verstehen, welcher bereits vorgeformt/profiliert ist, ist, wodurch mindestens ein vertiefter Abschnitt gebildet wird in den eine funktionale Struktur eingelegt wird.

Die untere Schicht ist wie gesagt ein Metallsubstrat, insbesondere ein Stahlsubstrat, vorzugsweise ein Stahlband und stellt insbesondere die untere Abschlussschicht des Schichtaufbaus dar, die während des Verpressens auf einem unteren Presselement oder Transportband der Presse aufliegt. Die optionale obere Schicht stellt insbesondere, aber nicht zwingend, die obere Abschlussschicht dar, die während des Verpressens mit einem oberen Presselement oder Transportband der Presse in Kontakt kommt. Der Bereich zwischen der unteren Schicht und einer funktionalen Struktur oder der oberen Schicht ist die sogenannte Zwischenschicht, auch Kernschicht genannt. Dabei muss die Zwischenschicht erfindungsgemäß nicht durchgängig auf der unteren Schicht bzw. zwischen der oberen und unteren Schicht verlaufen, sondern kann auch wie gesagt nur in Abschnitten vorgesehen sein, wobei dann in dazu benachbarten Abschnitten insbesondere die obere Schicht die untere Schicht berührt.

Im Folgenden werden nun verschiedene Ausgestaltungen des Verfahrens beschrieben.

Gemäß einer Ausgestaltung ist vorgesehen, dass die Zwischenschicht Abschnitte mit einer durch eine Querschnittsreduzierung (Verringerung der Dicke) gebildeten Vertiefung aufweist, wobei in die Vertiefung jeweils eine funktionale Struktur eingelegt (eingesetzt) ist, wobei insbesondere die Schichtdicke der oberen Schicht und/oder unteren Schicht konstant ist.

Gemäß einer weiteren Ausgestaltung ist vorgesehen, dass die obere Schicht Abschnitte mit einer durch eine Querschnittsreduzierung (Verringerung der Dicke) gebildeten Vertiefung aufweist, wobei in die Vertiefung jeweils eine funktionale Struktur eingelegt (eingesetzt) ist, wobei insbesondere die Schichtdicke der unteren Schicht und/oder Zwischenschicht konstant ist.

Gemäß noch einer weiteren Ausgestaltung ist vorgesehen, dass die untere Schicht Abschnitte mit einer durch eine Querschnittsreduzierung (Verringerung der Dicke) gebildeten Vertiefung aufweist, wobei in die Vertiefung jeweils eine funktionale Struktur und ein Abschnitt der Zwischenschicht eingelegt (eingesetzt) ist, wobei insbesondere die Schichtdicke der oberen Schicht konstant ist. Insbesondere ist dabei vorgesehen, dass die obere Schicht die untere Schicht berührt.

Gemäß wieder einer weiteren Ausgestaltung ist vorgesehen, dass die Zwischenschicht erste Abschnitte aus einem ersten Zwischenschichtmaterial und dazu in Längsrichtung und/oder Querrichtung benachbarte zweite Abschnitte aus einem zweiten Zwischenschichtmaterial, das von dem ersten Zwischenschichtmaterial verschieden ist, aufweist und/oder die obere Schicht erste Abschnitte aus einem ersten Oberschichtmaterial und dazu in Längsrichtung und/oder Querrichtung benachbarte zweite Abschnitte aus einem zweiten Oberschichtmaterial, das von dem ersten Oberschichtmaterial verschieden ist, aufweist. Dabei ist denkbar, dass die ersten Abschnitte der Zwischenschicht und obere Schicht in vertikaler Richtung übereinander liegen und insbesondere miteinander fluchten, wobei in vertikaler Richtung zwischen einem ersten Abschnitt der Zwischenschicht und einem ersten Abschnitt der oberen Schicht jeweils eine funktionale Struktur angeordnet ist.

Gemäß noch einer Ausgestaltung ist vorgesehen, dass die Zwischenschicht Abschnitte aus einem ersten Zwischenschichtmaterial aufweist, wobei in Längsrichtung und/oder Querrichtung benachbart dazu Aussparungen zwischen der unteren Schicht und der oberen Schicht vorgesehen sind, in denen jeweils eine funktionale Struktur angeordnet ist.

Gemäß wieder einer weiteren Ausgestaltung ist vorgesehen, dass das Material der oberen Schicht durchgängig oder abschnittsweise, insbesondere in den ersten Abschnitten aus dem ersten Oberschichtmaterial, transparent ist.

Gemäß wieder einer weiteren Ausgestaltung ist vorgesehen, dass das Material der oberen Schicht durchgängig oder abschnittsweise (bezogen auf die Längs- und/oder Querrichtung), insbesondere in den ersten Abschnitten aus dem ersten Oberschichtmaterial, aus mindestens einer Folie, insbesondere mindestens einer Kunststofffolie, und/oder durchgängig oder abschnittsweise, insbesondere in den zweiten Abschnitten aus dem zweiten Oberschichtmaterial, aus Metall, insbesondere aus Stahl, vorzugsweise aus Flachstahl, besteht.

Gemäß einer weiteren Ausgestaltung ist vorgesehen, dass das Material der Zwischenschicht durchgängig oder abschnittsweise (bezogen auf die Längs- und/oder Querrichtung), insbesondere in den Abschnitten aus dem ersten Zwischenschichtmaterial und/oder in den Abschnitten aus dem zweiten Zwischenschichtmaterial, aus Kunststoff, insbesondere flexiblem Kunststoff, vorzugsweise aus mindestens einer Kunststofffolie, oder aus Metall, insbesondere aus Stahl, vorzugsweise aus Flachstahl, besteht.

Durch die vorangehenden Ausgestaltungen läßt sich auf besonders einfache Weise in dem noch nicht verpressten Schichtaufbau an der jeweiligen Stelle, an der die funktionale Struktur eingebettet sein soll, eine entsprechende Vertiefung oder Ausnehmung vorsehen, deren Höhe und insbesondere Volumen zumindest weitestgehend der Höhe bzw. dem Volumen der eingebetteten funktionalen Struktur entspricht. Dabei können solche Vertiefungen bzw. Ausnehmungen nur in entweder der unteren Schicht, der Zwischenschicht oder der oberen Schicht vorgesehen sein oder sich auch von der einen Schicht in die jeweils benachbarte (vertikal darüber angeordnete) Schicht fortsetzen, so dass beispielsweise eine Ausnehmung (Aussparung) für die funktionale Struktur in vertikaler Richtung von der unteren Schicht bis an die obere Schicht oder sogar bis in die obere Schicht oder von der Zwischenschicht bis in die obere Schicht reicht.

Es sei darauf hingewiesen, dass wenn von einer (unteren, oberen, Zwischen-) Schicht die Rede ist, die jeweilige Schicht auch mehrere Lagen aufweisen kann. So kann beispielsweise eine Zwischenschicht auch eine Schicht aus Kleber und/oder eine Schicht aus Primer aufweisen. Entsprechendes gilt für die untere und obere Schicht, die grundsätzlich auch mehrlagig sein kann.

Erfindungsgemäß ist vorgesehen, dass die untere Schicht, insbesondere nach dem Aufbringen eines Primers und gegebenenfalls einer Streifenlackierung, die insbesondere im Randbereich (bezogen auf die Querrichtung) des Schichtaufbaus vorgesehen ist, abschnittsweise verformt bzw. profiliert wird (eine Verformung kann auch ein Linieren oder eine Sickung sein), wodurch mindestens ein vertiefter Abschnitt gebildet wird.

Dabei ist vorgesehen, dass in den jeweiligen vertieften Abschnitten, insbesondere nach dem Aufbringen eines Klebers in dem jeweiligen vertieften Abschnitt, eine funktionale Struktur, insbesondere durch Aufkaschieren, eingelegt (eingesetzt) wird, deren oberseitige Oberfläche insbesondere mit der oberseitigen Oberfläche außerhalb des vertieften Abschnitts in einer gemeinsamen Ebene liegt.

Die funktionale Struktur wird vor oder nach dem Einlegen in den jeweiligen vertieften Abschnitt mit elektrischen Kontakten bzw. Kontaktierungen versehen.

Schließlich ist gemäß noch einer Ausgestaltung vorgesehen, dass auf die funktionale Struktur, gegebenenfalls auch auf die elektrischen Kontakte oder Kontaktierungen, und/oder den Schichtaufbau außerhalb des vertieften Abschnitts eine Schutzschicht, beispielsweise in Form einer Barrierefolie aufkaschiert wird.

Die zuvor hergeleitete und aufgezeigte Aufgabe wird ferner gemäß einer zweiten Lehre der vorliegenden Erfindung gelöst durch einen Metallverbundwerksoff, insbesondere einen Stahlverbundwerkstoff mit eingebetteter funktionaler Struktur, hergestellt durch ein wie zuvor definiertes Verfahren.

Es gibt nun eine Vielzahl von Möglichkeiten, das erfindungsgemäße Verfahren und den erfindungsgemäßen Metallverbundwerkstoff auszugestalten und weiterzubilden. Hierzu sei einerseits verwiesen auf die dem Patentanspruch 1 nachgeordneten Patentansprüche, andererseits auf die Beschreibung von Ausführungsbeispielen in Verbindung mit der Zeichnung. In der Zeichnung zeigen:
- Fig. 1 bis 5: verschiedene Ausgestaltungen eines Schichtaufbaus während des Verpressens zu einem Metallverbundwerkstoff,
- Fig. 6 bis 12: einzelne Verfahrensschritte eines Ausführungsbeispiels des erfindungsgemäßen Herstellungsverfahrens und
- Fig. 13 bis 18: einzelne Verfahrensschritte eines alternativen Ausführungsbeispiels des erfindungsgemäßen Herstellungsverfahrens.

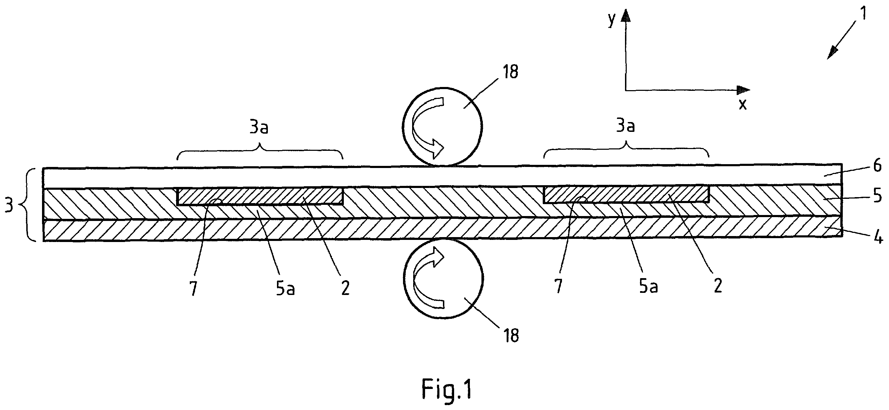

Die Figuren 1 bis 5 zeigen verschiedene Ausführungsbeispiele, bei denen funktionale Strukturen 2 in einen Schichtaufbau 3 eingebettet werden und dieser Schichtaufbau 3 anschließend mittels einer hier schematisch dargestellten Presseinrichtung 18 verpresst wird. Dabei ist die Längsrichtung mit X und die vertikale Richtung mit Y bezeichnet. Z bezeichnet im Folgenden die Querrichtung.

Es ist deutlich erkennbar, dass bei allen Ausführungsbeispielen trotz der eingebetteten funktionalen Strukturen 2 die Oberseite des Schichtaufbaus 3 durchgängig parallel zur Unterseite des Schichtaufbaus 3 verläuft.

Bei allen Ausführungsbeispielen ist die untere Schicht 4 beispielsweise ein Stahlband, auf welches in mehreren Schritten weitere Schichten auflaminiert (aufkaschiert) werden bzw. worden sind. Denkbar ist auch die Verwendung von Metalltafeln oder Metallplatten (hier nicht dargestellt), auf welche in mehreren Schritten weitere Schichten auflaminiert (aufkaschiert) werden können.

Bei dem in Fig. 1 gezeigten Ausführungsbeispiel ist auf die untere Schicht 4 eine Zwischenschicht 5 in Form einer Trägerfolie aufgebracht, wobei in Abschnitten 5a, die in Längsrichtung X voneinander beabstandet sind, Vertiefungen 7 eingebracht sind. Die Vertiefungen 7 werden dabei durch eine Querschnittsreduzierung innerhalb des Abschnitts 5a der Zwischenschicht 5 gebildet. In die Vertiefungen 7 ist jeweils eine funktionale Struktur 2 eingelegt. In vertikaler Richtung Y ist die Gesamtheit aus Zwischenschicht 5 und funktionalen Strukturen 2 nach oben hin durch eine obere Schicht 6, hier in Form einer transparenten Schutzfolie, abgedeckt. Die Schichtdicke der oberen Schicht 6 und der unteren Schicht 4 ist dabei jeweils vor dem Verpressen und nach dem Verpressen konstant. Durch das Verpressen wird ein Stahlverbundwerkstoff 1 erzeugt, bei dem in Abschnitten 3a des Schichtaufbaus 3 funktionale Strukturen 2 eingebettet sind.

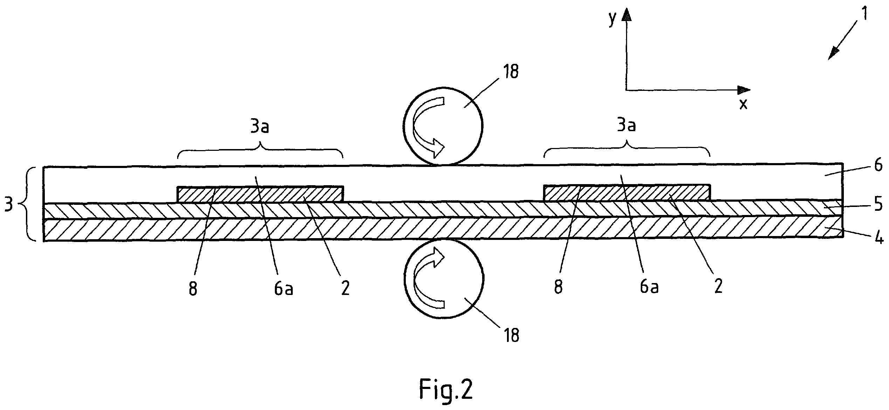

Fig. 2 zeigt ein Ausführungsbeispiel, bei dem im Unterschied zu dem Ausführungsbeispiel in Fig. 1 eine Vertiefung 8 durch ein Querschnittsreduzierung in Abschnitten 6a der oberen Schicht 6 gebildet wird. Diese Vertiefung 8 dient zur Aufnahme der jeweiligen funktionalen Strukturen 2. In diesem Fall ist die Schichtdicke der unteren Schicht 4 und der Zwischenschicht 5 jeweils konstant.

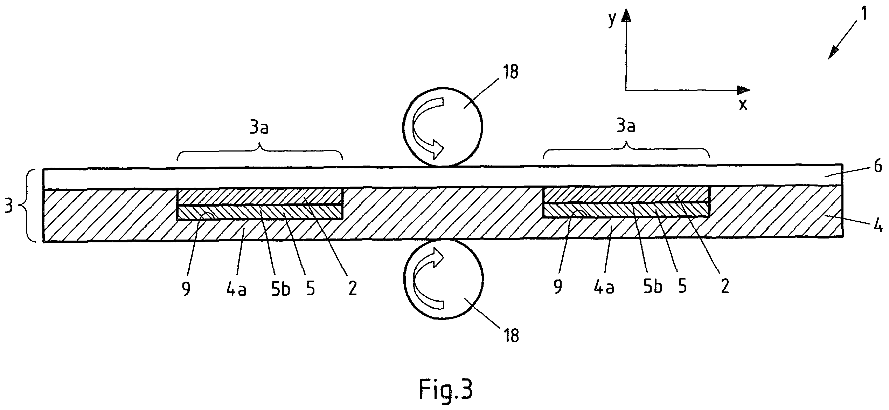

Bei dem Ausführungsbeispiel in Fig. 3 sind in der unteren Schicht 4 Abschnitte 4a mit einer Querschnittsreduzierung vorgesehen, durch die eine Vertiefung 9 gebildet wird. In der Vertiefung 9 ist dann, bezogen auf die vertikale Richtung Y, zuunterst die Zwischenschicht 5, nämlich in Form von Materialabschnitten 5b, und darüber jeweils eine funktionale Struktur 2 angeordnet. Die Gesamtheit aus unterer Schicht 4, Abschnitten 5b der Zwischenschicht 5 und funktionalen Strukturen 2 wird in vertikaler Richtung nach oben hin durch die obere Schicht 6 abgedeckt, die über ihre gesamte Erstreckung in Längsrichtung X eine konstante Dicke aufweist.

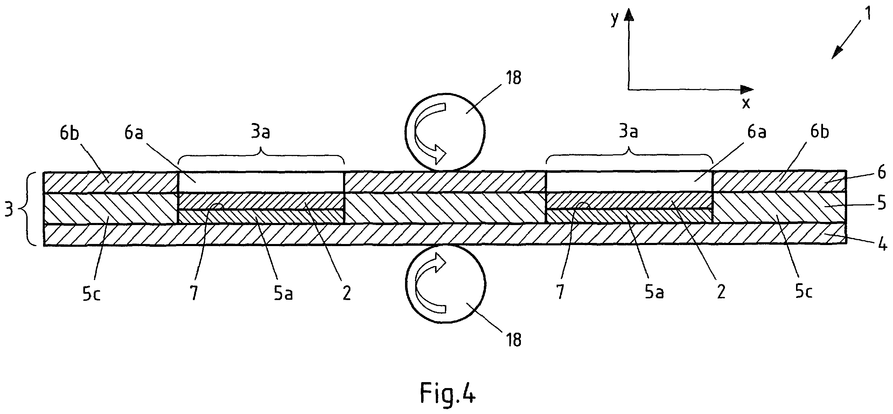

Bei dem Ausführungsbeispiel in Fig. 4 weist die untere Schicht 4 eine konstante Schichtdicke auf. Darüber ist dann eine Zwischenschicht 5 mit dünneren Abschnitten 5a und dickeren Abschnitten 5c angeordnet, die jeweils aus dem gleichen oder aus einem unterschiedlichen Zwischenschichtmaterial bestehen können. Durch das Vorsehen dünnerer Abschnitte 5a der Zwischenschicht 5 ist zwangsläufig in diesen Abschnitten 5a gegenüber den Abschnitten 5c eine Querschnittsreduzierung der Zwischenschicht 5 vorgesehen, durch die auch hier Vertiefungen 7 in der Zwischenschicht 5 gebildet werden. Die Vertiefungen 7 sind wie bei dem Ausführungsbeispiel in Fig. 1 jeweils von einer funktionalen Struktur 2 ausgefüllt. Die Gesamtheit aus ersten Abschnitten 5a und zweiten Abschnitten 5c der Zwischenschicht 5 und funktionalen Strukturen 2 wird in vertikaler Richtung Y nach oben hin von einer oberen Schicht 6 abgedeckt, die in diesem Ausführungsbeispiel ebenfalls aus ersten Abschnitten 6a und zweiten Abschnitten 6b besteht. Die Abschnitte 6a der oberen Schicht 6 liegen exakt über den Abschnitten 5a der Zwischenschicht 5 und fluchten mit diesen (haben dieselben Begrenzungen in Längsrichtung X und Querrichtung Z). Die ersten Abschnitte 6a der oberen Schicht 6 bestehen hier aus einem transparenten ersten Material, insbesondere Kunststoff. Die Abschnitte 6b bestehen hier ebenfalls aus Stahl bzw. Stahlband. Auch in diesem Fall ist die Oberseite des Schichtaufbaus 3 über die gesamte Erstreckung in Längsrichtung X parallel zur Unterseite des Schichtaufbaus 3 angeordnet.

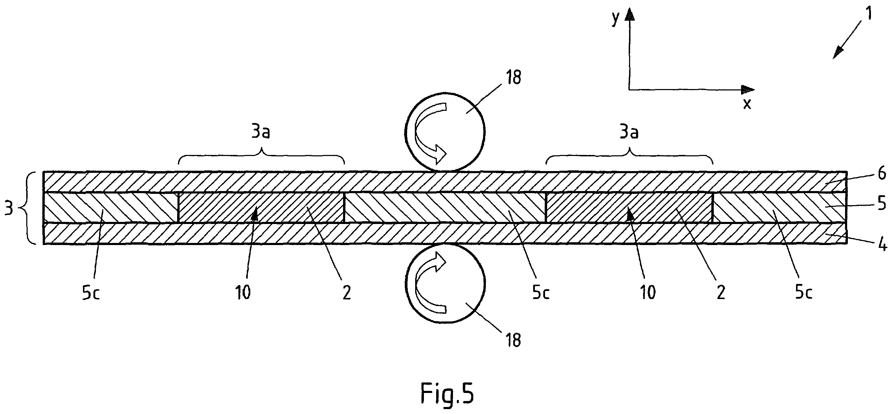

Gemäß dem Ausführungsbeispiel in Fig. 5 besteht die untere Schicht 4 und die obere Schicht 6 beispielsweise jeweils aus einem Stahlband. Die Zwischenschicht 5 besteht aus Abschnitten 5c, hier beispielsweise aus Kunststoff, die in Längsrichtung X voneinander beabstandet sind. In den Bereichen dazwischen sind Aussparungen 10 zwischen der unteren Schicht 4 und der oberen Schicht 6 vorgesehen, die hier vollständig von funktionalen Strukturen 2 ausgefüllt werden.

Es sei darauf hingewiesen, dass hier in den Ausführungsbeispielen der Figuren 4 bis 5 mehrere funktionale Strukturen 2 in Längsrichtung X voneinander beabstandet in den Schichtaufbau 3 eingebettet sind. Es ist aber auch denkbar, eine einzelne durchgehende funktionale Struktur in Längsrichtung vorzusehen, wobei entsprechende Vertiefungen 7, 8 und/oder 9 in den jeweiligen Schichten 4, 5 und/oder 6 dann ebenfalls in Längsrichtung X durchgängig vorgesehen sind, aber dann zwingend in Querrichtung Z (vom Material der jeweiligen Schicht) begrenzt sind. In letzterem Fall (in Längsrichtung durchgängige Vertiefung und durchgängige funktionale Schicht) hat die Vertiefung und die funktionale Schicht also jeweils eine geringere Breite als die einzelnen Schichten 4, 5 und 6 des Schichtaufbaus 3 oder Kombination aus beiden. Nicht dargestellt ist ein bereits vorgeformtes bzw. profiliertes Metallsubstrat als untere Schicht, welches beispielsweise ein hutförmiges Profil (offenes Profil) aufweisen kann und eine funktionale Struktur das offene Profil im Wesentlichen vollständig ausfüllen kann, wobei die Begrenzung in Querrichtung wie auch in vertikaler Richtung durch abstehende Bereiche des hutförmigen Profils bereitgestellt wird. Eine obere Schicht, welche bündig mit den Enden der abstehenden Bereiche abschließt, kann somit vollständig die funktionale Schicht bedecken.

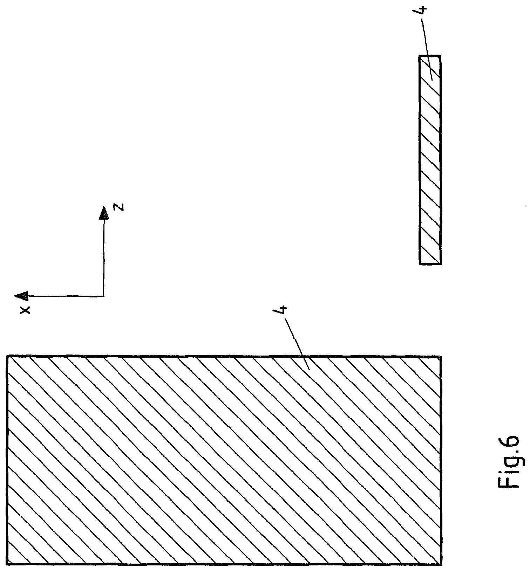

In den Figuren 6 bis 12 werden nun beispielhaft einzelne Verfahrensschritte eines erfindungsgemäßen Herstellungsverfahrens beschrieben.

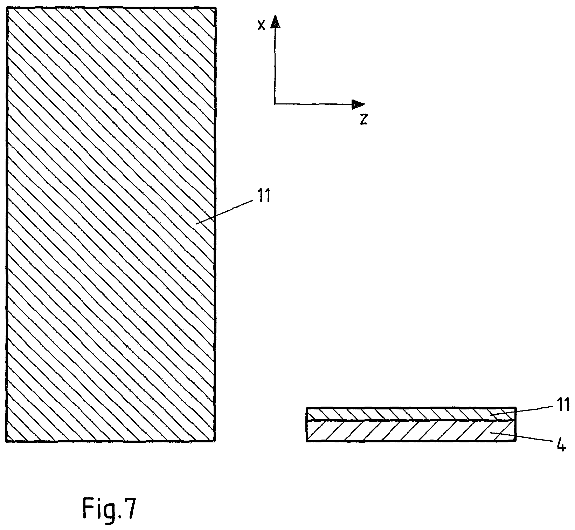

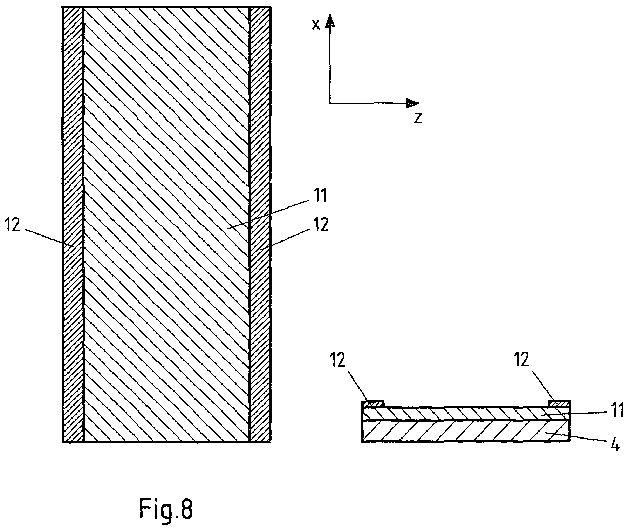

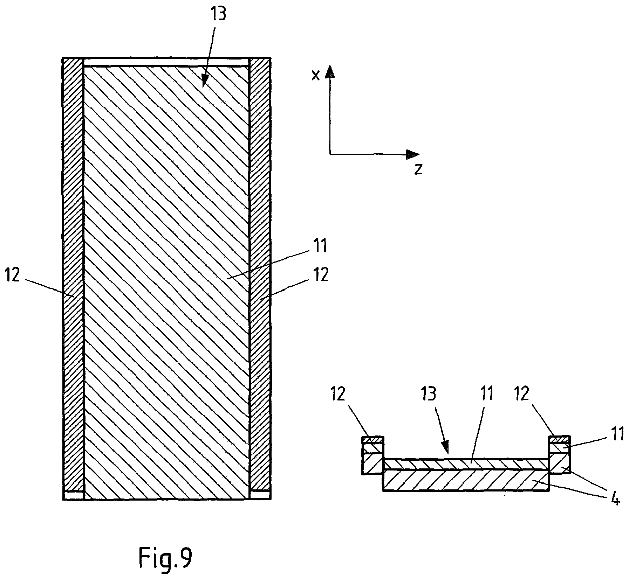

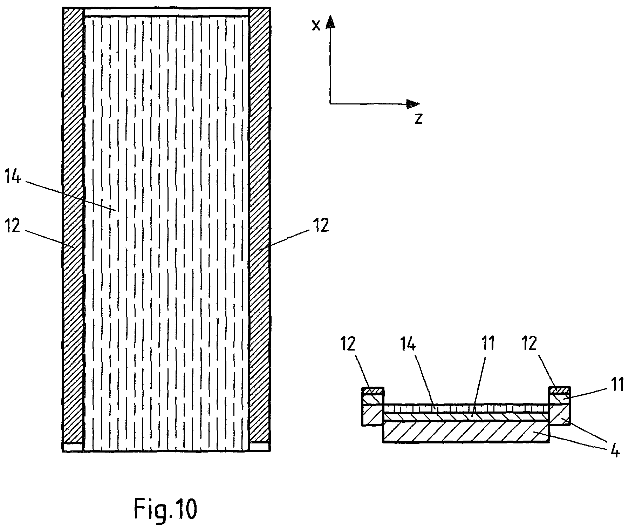

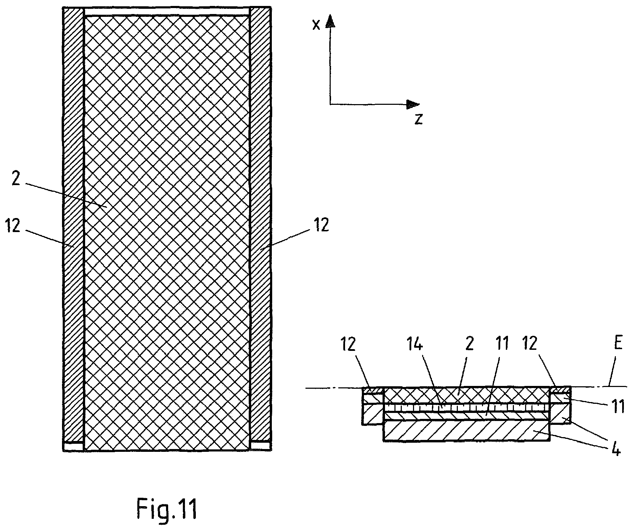

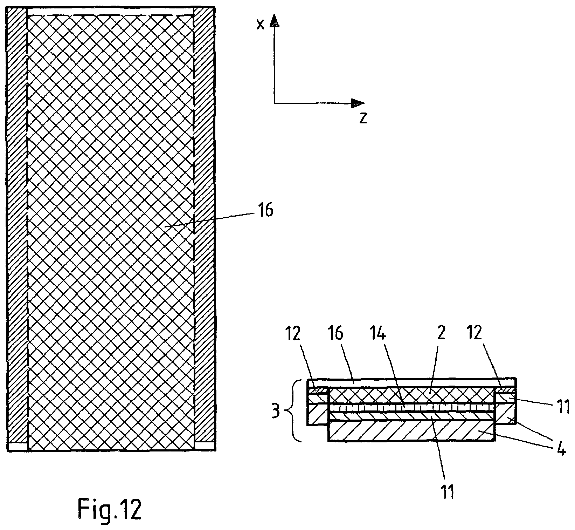

In Fig. 6 wird beispielsweise zunächst ein verzinkter Flachstahl als untere Schicht 4 in Produktionsrichtung bzw. Längsrichtung X transportiert. Gemäß Fig. 7 wird vollflächig ein Primer 11 aufgetragen, der einen Teil der bereits beschriebenen Zwischenschicht 5 des späteren Schichtaufbaus 3 bildet. Gemäß Fig. 8 wird dann in den Randbereichen auf den Primer eine Streifenlackierung 12 aufgetragen, die ebenfalls einen Teil der Zwischenschicht 5 bildet. Gemäß Fig. 9 wird der mit dem Primer 11 versehene Flachstahl 4 im Bereich zwischen den Streifenlackierungen 12 verformt bzw. profiliert, wodurch sich eine Vertiefung 13 zwischen den Streifenlackierungen 12 bildet. Durch die Verformung bzw. Profilierung kommt es auch zu einem Versatz zwischen einem mittleren Abschnitt und Randabschnitten der unteren Schicht 4 und der Primerschicht 11. Gemäß Fig. 10 wird dann in der Vertiefung 13 auf den Primer 11 ein Kleber 14 aufgetragen, der ebenfalls einen Teil der Zwischenschicht 5 des späteren Schichtaufbaus 3 bildet. Gemäß Fig. 11 wird dann auf den Kleber eine funktionale Struktur 2 aufkaschiert, wobei die oberseitige Oberfläche der funktionalen Struktur 2 und die oberseitige Oberfläche der außerhalb der Vertiefung 13 liegenden Bereiche des Schichtaufbaus, hier also der Streifenlackierungen 12, in einer gemeinsamen Ebene E liegen. Gemäß Fig. 12 wird schließlich noch eine Schutzfolie 16 in Form einer Barrierefolie aufgebracht, die in diesem Ausführungsbeispiel die obere Schicht 6 des nun fertigen Schichtaufbaus 3 bildet.

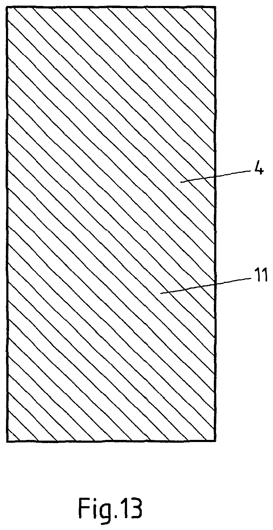

Alternative Verfahrensschritte eines erfindungsgemäßen Herstellungsverfahrens werden nun anhand der Figuren 13 bis 18 beschrieben.

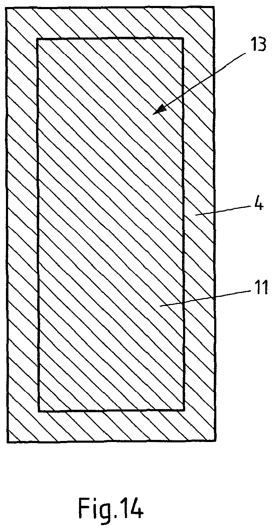

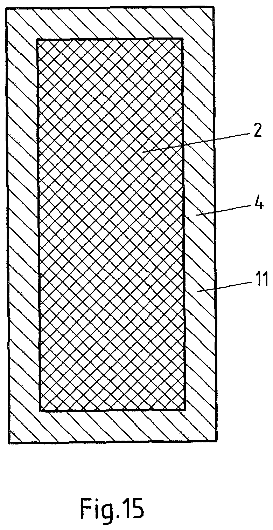

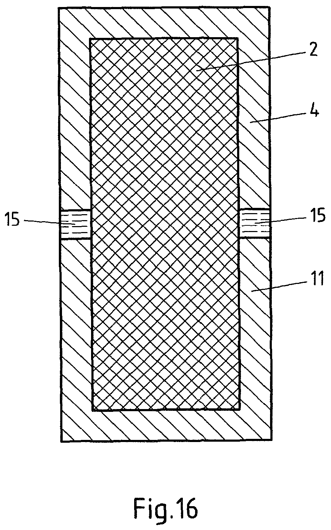

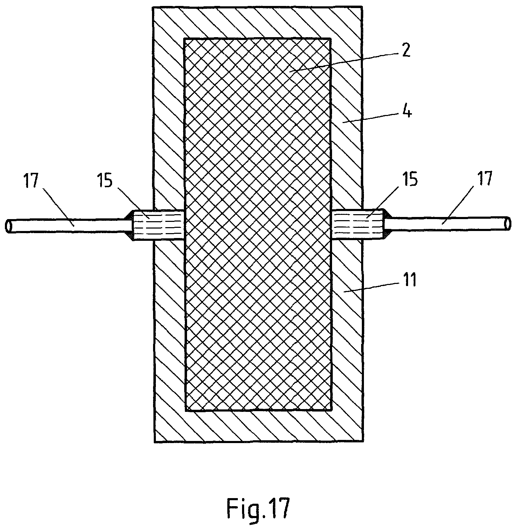

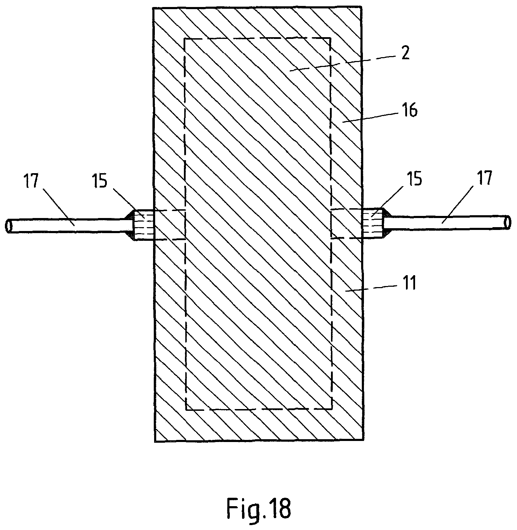

Gemäß Fig. 13 wird beispielsweise zunächst ein verzinkter Flachstahl abgetafelt und mit einer Primerschicht 11 versehen bereitgestellt. Gemäß Fig. 14 wird dann ein Bereich der unteren Schicht 4 abgepresst, wodurch eine Vertiefung 13 gebildet wird. Gemäß Fig. 15 wird in den vertieften Bereich 13 eine funktionale Struktur 2, die bereits unterseitig mit Haftklebeband (pressure-sensitive adhesive) versehen ist (), eingelegt. Fig. 16 zeigt eine Variation zu Fig. 15, bei der die eingelegte funktionale Schicht bereits über den funktionellen Bereich 2 überstehende flache, elektrische Kontaktierungen 15 enthält, wobei der Bereich der Kontaktierungen 15 in diesem Fall von der zuvor durch Abpressen erzeugten Vertiefung 13 mit umfasst wurde. Gemäß Fig. 17 können dann elektrische Leiter (Stromzu- oder -ableitung) angebracht werden, wobei hier ein Flachkabel 15 in ein zylindrisches Kabel 17 übergeht. Schließlich kann, wie Fig. 18 zeigt, optional eine selbstklebende Schutzfolie 16 aufgebracht werden, die dann die funktionale Struktur 2 und im Randbereich die Primerschicht 11 und einen Teil der Kontaktierungen 15 abdeckt.

Beispielhafte Anwendungen des erfindungsgemäßen Stahlverbundwerkstoffs mit eingebetteten funktionalen Strukturen sind:
- Photovoltaik: Organische Photovoltaik (OPV), Hybrid OPV (HOPV), Festkörper-Farbstoffsolarzellen (ss-DSC), Perowskit-basierte Solarzellen, Dünnfilm-Silizium (a-Si), CIGS/CIS/CZTS-Solarzellen, CdTe-Solarzellen
- Organische Leuchtdioden (OLED)
- LED eingebettet mit Leiterbahnen in flexibler Matrix (z.B. Silikon)
- Light Emitting Electrochemical Cell (LEC)
- Phosphoreszierende Folien
- Dünnschichtdisplays, z. B. AMOLED
- Flächige Sensoren (Drucksensoren, berührungsempfindliche Sensoren (kapazitiv) etc.)
- (gedruckte) flache Batterien (TFB=thin film battery)

Als Applikationsbeispiele sind zu nennen:
- gebäudeintegrierte Photovoltaik (BIPV); "energy harvester" on/off grid
- flächige Beleuchtung (LED/OLED/LEC, Orientierungshilfen, Notfallbeleuchtung)
- visuelle Informationen (TFT, LCD, AMOLED-Display)
- Sensormatte im Boden registriert Personen durch Druck
- Touchpad, Touch Display
- integrierte Energiespeicherung

## Patentansprüche

1. Verfahren zum Herstellen eines Metallverbundwerkstoffs (1) mit eingebetteter funktionaler Struktur (2), bei dem ein Schichtaufbau (3) aus mehreren Schichten (4,5,6), die in vertikaler Richtung (Y) übereinander angeordnet werden, hergestellt und verpresst wird, wobei der Schichtaufbau (3) durch die folgenden Schritte hergestellt wird:
- Bereitstellen einer unteren Schicht (4) aus einem Metallsubstrat,
- zumindest abschnittsweises Anordnen einer Zwischenschicht (5) in vertikaler Richtung (Y) über der unteren Schicht (4), die die untere Schicht (4) berührt und
- Anordnen von einer oder mehreren funktionalen Strukturen (2) jeweils in einem Abschnitt (3a) des Schichtaufbaus (3),
**dadurch gekennzeichnet, dass**,
der Schichtaufbau (3) vor dem Verpressen in dem jeweiligen Abschnitt (3a) mit der funktionalen Struktur (2) zumindest in einem Teilabschnitt oder über die gesamte Längs- und/oder Quererstreckung des Abschnitts mit der funktionalen Struktur dieselbe Dicke wie im übrigen Schichtaufbau (3) hat;
die untere Schicht (4) abschnittsweise verformt bzw. profiliert wird, wodurch mindestens ein vertiefter Abschnitt (13) gebildet wird;
in den jeweiligen vertieften Abschnitten (13) eine funktionale Struktur (2) eingelegt wird und
die funktionale Struktur (2) vor oder nach dem Einlegen in den jeweiligen vertieften Abschnitt (13) mit elektrischen Kontakten (15) versehen wird.

2. Verfahren nach Anspruch 1, **dadurch gekennzeichnet, dass** zum Herstellen des Schichtaufbaus (3) ferner der folgende Schritt durchgeführt wird:
- zumindest abschnittsweises Anordnen einer oberen Schicht (6) in vertikaler Richtung (Y) über der unteren Schicht (4) und insbesondere über zumindest einer der funktionalen Strukturen (2).

3. Verfahren nach Anspruch 1 oder 2, **dadurch gekennzeichnet, dass** die Zwischenschicht (5) Abschnitte (5a) mit einer durch eine Querschnittsreduzierung gebildeten Vertiefung (7) aufweist, wobei in die Vertiefung (7) jeweils eine funktionale Struktur (2) eingelegt ist, wobei insbesondere die Schichtdicke der unteren Schicht (4) und/oder oberen Schicht (6) konstant ist.

4. Verfahren nach Anspruch 2 oder 3, **dadurch gekennzeichnet, dass** die obere Schicht (6) Abschnitte (6a) mit einer durch eine Querschnittsreduzierung gebildeten Vertiefung (8) aufweist, wobei in die Vertiefung (8) jeweils eine funktionale Struktur (2) eingelegt ist, wobei insbesondere die Schichtdicke der unteren Schicht (4) und/oder Zwischenschicht (5) konstant ist.

5. Verfahren nach einem der Ansprüche 1 bis 4, **dadurch gekennzeichnet, dass** die untere Schicht (4) Abschnitte (4a) mit einer durch eine Querschnittsreduzierung gebildeten Vertiefung (9) aufweist, wobei in die Vertiefung (9) jeweils eine funktionale Struktur (2) und ein Abschnitt (5b) der Zwischenschicht (5) eingelegt ist, wobei insbesondere die Schichtdicke der oberen Schicht (6) konstant ist.

6. Verfahren nach einem der Ansprüche 1 bis 5, **dadurch gekennzeichnet, dass** die Zwischenschicht (5) erste Abschnitte (5a) aus einem ersten Zwischenschichtmaterial und dazu in Längsrichtung (X) und/oder Querrichtung (Z) benachbarte zweite Abschnitte (5c) aus einem zweiten Zwischenschichtmaterial, das von dem ersten Zwischenschichtmaterial verschieden ist, aufweist und/oder die obere Schicht (6) erste Abschnitte (6a) aus einem ersten Oberschichtmaterial und dazu in Längsrichtung (X) und/oder Querrichtung (Z) benachbarte zweite Abschnitte (6b) aus einem zweiten Oberschichtmaterial, das von dem ersten Oberschichtmaterial verschieden ist, aufweist.

7. Verfahren nach Anspruch 6, **dadurch gekennzeichnet, dass** die ersten Abschnitten (5a,6a) der Zwischenschicht (5) und oberen Schicht (6) in vertikaler Richtung (Y) übereinander liegen und insbesondere miteinander fluchten, wobei in vertikaler Richtung (Y) zwischen einem ersten Abschnitt (5a) der Zwischenschicht (5) und einem ersten Abschnitt (6a) der oberen Schicht (6) jeweils eine funktionale Struktur (2) angeordnet ist.

8. Verfahren nach einem der Ansprüche 2 bis 5, **dadurch gekennzeichnet, dass** die Zwischenschicht (5) Abschnitte (5c) aus einem ersten Zwischenschichtmaterial aufweist, wobei in Längsrichtung (X) und/oder Querrichtung (Y) benachbart dazu Aussparungen (10) zwischen der oberen Schicht (6) und der unteren Schicht (4) vorgesehen sind, in denen jeweils eine funktionale Struktur (2) angeordnet ist.

9. Verfahren nach einem der Ansprüche 2 bis 8, **dadurch gekennzeichnet, dass** das Material der oberen Schicht (6) durchgängig oder abschnittsweise, insbesondere in den ersten Abschnitten (6a) aus dem ersten Oberschichtmaterial, transparent ist.

10. Verfahren nach einem der Ansprüche 2 bis 9, **dadurch gekennzeichnet, dass** das Material der oberen Schicht (6) durchgängig oder abschnittsweise, insbesondere in den ersten Abschnitten (6a) aus dem ersten Oberschichtmaterial, aus mindestens einer Folie, insbesondere mindestens einer Kunststofffolie, und/oder durchgängig oder abschnittsweise, insbesondere in den zweiten Abschnitten (6b) aus dem zweiten Oberschichtmaterial, aus Metall, insbesondere aus Stahl, vorzugsweise aus Flachstahl, besteht.

11. Verfahren nach einem der Ansprüche 1 bis 10, **dadurch gekennzeichnet, dass** das Material der Zwischenschicht (5) durchgängig oder abschnittsweise, insbesondere in den Abschnitten (5a,5c) aus dem ersten Zwischenschichtmaterial und/oder in den Abschnitten (5c) aus dem zweiten Zwischenschichtmaterial, aus Kunststoff, insbesondere flexiblem Kunststoff, vorzugsweise aus mindestens einer Kunststofffolie, oder aus Metall, insbesondere aus Stahl, vorzugsweise aus Flachstahl, besteht.

12. Verfahren nach einem der Ansprüche 1 bis 11, **dadurch gekennzeichnet, dass** die untere Schicht (4), nach dem Aufbringen eines Primers (11) und gegebenenfalls einer Streifenlackierung (12), abschnittsweise verformt bzw. profiliert wird, wodurch mindestens ein vertiefter Abschnitt (13) gebildet wird.

13. Verfahren nach Anspruch 12, **dadurch gekennzeichnet, dass** in den jeweiligen vertieften Abschnitten (13), insbesondere nach dem Aufbringen eines Klebers (14) in dem jeweiligen vertieften Abschnitt (13), eine funktionale Struktur (2), insbesondere durch Aufkaschieren, eingelegt wird, deren oberseitige Oberfläche mit der oberseitigen Oberfläche außerhalb des vertieften Abschnitts (13) in einer gemeinsamen Ebene (E) liegt.

14. Verfahren nach Anspruch 13, **dadurch gekennzeichnet, dass** die funktionale Struktur (2) vor oder nach dem Einlegen in den jeweiligen vertieften Abschnitt (13) mit elektrischen Kontakten (15) versehen wird.

15. Verfahren nach einem der Ansprüche 12 bis 14, **dadurch gekennzeichnet, dass** auf die funktionale Struktur (2) und/oder den Schichtaufbau (3) außerhalb des vertieften Abschnitts (13) eine Schutzschicht (16) aufkaschiert wird.

16. Metallverbundwerkstoff (1) mit eingebetteter funktionaler Struktur (2), hergestellt durch ein Verfahren nach einem der Ansprüche 1 bis 15.

## Claims

1. Method for producing a metal composite material (1) with an embedded functional structure (2), in which method a layer structure (3) composed of a plurality of layers (4, 5, 6), which are arranged above one another in a vertical direction (Y), is produced and compressed, wherein the layer structure (3) is produced by way of the following steps:
- providing a lower layer (4) from a metal substrate,
- arranging an intermediate layer (5) at least in certain portions in the vertical direction (Y) above the lower layer (4), said intermediate layer contacting the lower layer (4), and
- arranging one or more functional structures (2) in each case in a portion (3a) of the layer structure (3),
**characterized in that**, prior to the compression operation, the layer structure (3) in the respective portion (3a) with the functional structure (2), at least in a partial portion or over the entire longitudinal and/or transverse extent of the portion with the functional structure, has the same thickness as in the rest of the layer structure (3); the lower layer (4) is deformed or provided with profiling in certain portions, as a result of which at least one recessed portion (13) is formed; a functional structure (2) is inserted in the respective recessed portions (13) and the functional structure (2) is provided with electrical contacts (15) before or after insertion into the respective recessed portion (13).

2. Method according to Claim 1, **characterized in that**, for production of the layer structure (3), the following step is also carried out:
- arranging an upper layer (6) at least in certain portions in the vertical direction (Y) above the lower layer (4) and in particular above at least one of the functional structures (2).

3. Method according to Claim 1 or 2, **characterized in that** the intermediate layer (5) has portions (5a) with a recess (7) which is formed by a reduction in cross section, wherein a respective functional structure (2) is inserted into the recess (7), wherein in particular the layer thickness of the lower layer (4) and/or upper layer (6) is constant.

4. Method according to Claim 2 or 3, **characterized in that** the upper layer (6) has portions (6a) with a recess (8) which is formed by a reduction in cross section, wherein a respective functional structure (2) is inserted into the recess (8), wherein in particular the layer thickness of the lower layer (4) and/or intermediate layer (5) is constant.

5. Method according to one of Claims 1 to 4, **characterized in that** the lower layer (4) has portions (4a) with a recess (9) which is formed by a reduction in cross section, wherein in each case a functional structure (2) and a portion (5b) of the intermediate layer (5) are inserted into the recess (9), wherein in particular the layer thickness of the upper layer (6) is constant.

6. Method according to one of Claims 1 to 5, **characterized in that** the intermediate layer (5) has first portions (5a) composed of a first intermediate layer material and second portions (5c) which are adjacent to said first portions in the longitudinal direction (X) and/or transverse direction (Z) and which are composed of a second intermediate layer material that is different from the first intermediate layer material, and/or the upper layer (6) has first portions (6a) composed of a first upper layer material and second portions (6b) which are adjacent to said first portions in the longitudinal direction (X) and/or transverse direction (Z) and which are composed of a second upper layer material that is different from the first upper layer material.

7. Method according to Claim 6, **characterized in that** the first portions (5a, 6a) of the intermediate layer (5) and upper layer (6) lie above one another in the vertical direction (Y), and in particular are flush with one another, wherein, in the vertical direction (Y), a respective functional structure (2) is arranged between a first portion (5a) of the intermediate layer (5) and a first portion (6a) of the upper layer (6).

8. Method according to one of Claims 2 to 5, **characterized in that** the intermediate layer (5) has portions (5c) composed of a first intermediate layer material, wherein, adjacently to said portions in the longitudinal direction (X) and/or transverse direction (Y), cutouts (10) are provided between the upper layer (6) and the lower layer (4), a respective functional structure (2) being arranged in said cutouts.

9. Method according to one of Claims 2 to 8, **characterized in that** the material of the upper layer (6) is transparent in a continuous manner or in certain portions, in particular in the first portions (6a) composed of the first upper layer material.

10. Method according to one of Claims 2 to 9, **characterized in that** the material of the upper layer (6) is composed of at least one film, in particular at least one plastics film, in a continuous manner or in certain portions, in particular in the first portions (6a) composed of the first upper layer material, and/or is composed of metal, in particular of steel, preferably of flat steel, in a continuous manner or in certain portions, in particular in the second portions (6b) composed of the second upper layer material.

11. Method according to one of Claims 1 to 10, **characterized in that** the material of the intermediate layer (5) is composed of plastic, in particular flexible plastic, preferably of at least one plastics film, or of metal, in particular of steel, preferably of flat steel, in a continuous manner or in certain portions, in particular in the portions (5a, 5c) composed of the first intermediate layer material and/or in the portions (5c) composed of the second intermediate layer material.

12. Method according to one of Claims 1 to 11, **characterized in that** the lower layer (4), after the application of a primer (11) and optionally of a stripe coating (12), is deformed or provided with profiling in certain portions, as a result of which at least one recessed portion (13) is formed.

13. Method according to Claim 12, **characterized in that** a functional structure (2) is inserted, in particular by lamination, in the respective recessed portions (13), in particular after the application of an adhesive (14) in the respective recessed portion (13), the top-side surface of said functional structure lies in a common plane (E) with the top-side surface outside of the recessed portion (13).

14. Method according to Claim 13, **characterized in that** the functional structure (2) is provided with electrical contacts (15) before or after insertion into the respective recessed portion (13).

15. Method according to one of Claims 12 to 14, **characterized in that** a protective layer (16) is laminated onto the functional structure (2) and/or the layer structure (3) outside of the recessed portion (13).

16. Metal composite material (1) with an embedded functional structure (2), produced by a method according to one of Claims 1 to 15.

## Revendications

1. Procédé de fabrication d'un matériau composite métallique (1) muni d'une structure fonctionnelle intégrée (2), selon lequel une construction en couches (3) de plusieurs couches (4, 5, 6), qui sont agencées les unes au-dessus des autres dans la direction verticale (Y), est fabriquée et comprimée, la construction en couches (3) étant fabriquée par les étapes suivantes :
- la fourniture d'une couche inférieure (4) en un substrat métallique,
- l'agencement au moins en sections d'une couche intermédiaire (5) dans la direction verticale (Y) au-dessus de la couche inférieure (4), qui est en contact avec la couche inférieure (4), et
- l'agencement d'une ou de plusieurs structures fonctionnelles (2) respectivement dans une section (3a) de la construction en couches (3),
**caractérisé en ce que** la construction en couches (3) a, avant la compression, dans la section respective (3a) munie de la structure fonctionnelle (2), au moins dans une section partielle ou sur l'extension longitudinale et/ou transversale totale de la section munie de la structure fonctionnelle, la même épaisseur que dans le reste de la construction en couches (3) ; la couche inférieure (4) est déformée ou profilée en sections, ce qui permet de former au moins une section en creux (13) ; une structure fonctionnelle (2) est insérée dans les sections en creux respectives (13) et la structure fonctionnelle (2) est munie de contacts électriques (15) avant ou après l'insertion dans la section en creux respective (13).

2. Procédé selon la revendication 1, **caractérisé en ce que,** pour la fabrication de la construction en couches (3), l'étape suivante est en outre réalisée :
- l'agencement au moins en sections d'une couche supérieure (6) dans la direction verticale (Y) au-dessus de la couche inférieure (4) et notamment au-dessus d'au moins une des structures fonctionnelles (2).

3. Procédé selon la revendication 1 ou 2, **caractérisé en ce que** la couche intermédiaire (5) comprend des sections (5a) munies d'un creux (7) formé par une réduction de section transversale, une structure fonctionnelle (2) étant respectivement insérée dans le creux (7), l'épaisseur de couche de la couche inférieure (4) et/ou de la couche supérieure (6) étant notamment constante.

4. Procédé selon la revendication 2 ou 3, **caractérisé en ce que** la couche supérieure (6) comprend des sections (6a) munies d'un creux (8) formé par une réduction de section transversale, une structure fonctionnelle (2) étant respectivement insérée dans le creux (8), l'épaisseur de couche de la couche inférieure (4) et/ou de la couche intermédiaire (5) étant notamment constante.

5. Procédé selon l'une quelconque des revendications 1 à 4, **caractérisé en ce que** la couche inférieure (4) comprend des sections (4a) munies d'un creux (9) formé par une réduction de section transversale, une structure fonctionnelle (2) et une section (5b) de la couche intermédiaire (5) étant respectivement insérées dans le creux (9), l'épaisseur de couche de la couche supérieure (6) étant notamment constante.

6. Procédé selon l'une quelconque des revendications 1 à 5, **caractérisé en ce que** la couche intermédiaire (5) comprend des premières sections (5a) en un premier matériau de couche intermédiaire et des deuxièmes sections (5c), voisines de celles-ci dans la direction longitudinale (X) et/ou dans la direction transversale (Z), en un deuxième matériau de couche intermédiaire, qui est différent du premier matériau de couche intermédiaire, et/ou la couche supérieure (6) comprend des premières sections (6a) en un premier matériau de couche supérieure et des deuxièmes sections (6b), voisines de celles-ci dans la direction longitudinale (X) et/ou dans la direction transversale (Z), en un deuxième matériau de couche supérieure, qui est différent du premier matériau de couche supérieure.

7. Procédé selon la revendication 6, **caractérisé en ce que** les premières sections (5a, 6a) de la couche intermédiaire (5) et de la couche supérieure (6) sont situées les unes au-dessus des autres dans la direction verticale (Y) et sont notamment alignées les unes avec les autres, une structure fonctionnelle (2) étant respectivement agencée dans la direction verticale (Y) entre une première section (5a) de la couche intermédiaire (5) et une première section (6a) de la couche supérieure (6).

8. Procédé selon l'une quelconque des revendications 2 à 5, **caractérisé en ce que** la couche intermédiaire (5) comprend des sections (5c) en un premier matériau de couche intermédiaire, des évidements (10) entre la couche supérieure (6) et la couche inférieure (4) étant prévus en position voisine de celles-ci dans la direction longitudinale (X) et/ou dans la direction transversale (Y), dans lesquelles une structure fonctionnelle (2) est respectivement agencée.

9. Procédé selon l'une quelconque des revendications 2 à 8, **caractérisé en ce que** le matériau de la couche supérieure (6) est transparent en continu ou en sections, notamment dans les premières sections (6a) en le premier matériau de couche supérieure.

10. Procédé selon l'une quelconque des revendications 2 à 9, **caractérisé en ce que** le matériau de la couche supérieure (6) est constitué, en continu ou en sections, notamment dans les premières sections (6a) en le premier matériau de couche supérieure, d'au moins au moins une feuille, notamment d'au moins une feuille de matière plastique, et/ou est constitué, en continu ou en sections, notamment dans les deuxièmes sections (6b) en le deuxième matériau de couche supérieure, de métal, notamment d'acier, de préférence d'acier plat.

11. Procédé selon l'une quelconque des revendications 1 à 10, **caractérisé en ce que** le matériau de la couche intermédiaire (5) est constitué, en continu ou en sections, notamment dans les sections (5a, 5c) en le premier matériau de couche intermédiaire et/ou dans les sections (5c) en le deuxième matériau de couche intermédiaire, de matière plastique, notamment de matière plastique flexible, de préférence d'au moins une feuille de matière plastique, ou de métal, notamment d'acier, de préférence d'acier plat.

12. Procédé selon l'une quelconque des revendications 1 à 11, **caractérisé en ce que** la couche inférieure (4) est déformée ou profilée en sections après l'application d'un apprêt (11) et éventuellement d'un vernissage en bandes (12), ce qui permet de former au moins une section en creux (13).

13. Procédé selon la revendication 12, **caractérisé en ce qu'**une structure fonctionnelle (2), est insérée, notamment par stratification, dans les sections en creux respectives (13), notamment après l'application d'un adhésif (14) dans la section en creux respective (13), dont la surface du côté supérieur se situe dans un plan commun (E) avec la surface du côté supérieur à l'extérieur de la section en creux (13).

14. Procédé selon la revendication 13, **caractérisé en ce que** la structure fonctionnelle (2) est munie de contacts électriques (15) avant ou après l'insertion dans la section en creux respective (13).

15. Procédé selon l'une quelconque des revendications 12 à 14, **caractérisé en ce qu'**une couche de protection (16) est stratifiée sur la structure fonctionnelle (2) et/ou la construction de couches (3) à l'extérieur de la section en creux (13).

16. Matériau composite métallique (1) muni d'une structure fonctionnelle intégrée (2), fabriqué par un procédé selon l'une quelconque des revendications 1 à 15.
